# EUROPEAN PATENT SPECIFICATION

(11) **EP 0 473 889 B1**
(45) Date of publication and mention of the grant of the patent: **06.09.1995**
(21) Application number: 91109872.1
(22) Date of filing: 17.06.1991
(51) Int. Cl.: C05F 17/02, C05F 3/00

(54) **A plant for the treatment of animal dejections**
Anlage zur Behandlung von Tierexkrementen
Installation de traitement des déjections animals

(30) Priority: 18.06.1990 IT 2067190
(43) Date of publication of application: 11.03.1992
(73) Proprietor: GNOSIS SRL, I-21050 Cairate Varese) (IT)
(72) Inventor: Cerchiari, Emilio, I-21052 Busto Arsizio (Varese) (IT); Cappelletti, Leonardo, I-21052 Busto Arsizio (Varese) (IT)
(74) Representative: Dragotti, Gianfranco

(56) References cited:
- EP-A- 0 063 621
- WO-A-88/00082
- WO-A-89/05784
- DE-A- 3 627 265
- GB-A- 1 299 630

## Description

The present invention relates to the treatment of animal dejections, particularly those resulting from the zootechnic breedings (sheep, cattle, swine, poultry etc.).

In the following specification reference shall be often made to the dejections of the swine breedings, since they are one of the materials of most difficult treatment, but it is to be understood that it should not be meant in a limiting sense of the scope of the present invention.

It is well known that the animal dejections, specially those of swine, are mostly in liquid or partially liquid form and have a very high polluting load. In the case of swine, which are normally bred in relatively narrow spaces, the organic polluting load of the sewage does easily attain BOD₅ values of hundreds thousands units.If furthermore account is taken of the fact that each swine produces on the average about 10 kg/day of dejections, it is evident that the daily volumes of sewage to be disposed off are already more than merely relevant in the case of a middle size breeding (of the order of few thousands swine).

Their depuration by the biological way, which is the only one to date theoretically feasible, raises very serious problems, since these dejections, in order to render it possible their treatment, must be diluted with high water volumes whereby the potentiality of the biological depuration plant must be very high with the self-evident problems, even from the only point of view of the investments for the plant building and operation.

On the other side, the only one alternative to the afore said type of treatment, namely the transportation of the dejections towards areas capable of allowing for the surface spreading of the dejections in the state they are, is as matter of fact not acceptable, both owing to the environnmental impact (pollution of the water bearing strata and miasmas) and due to the high transportation costs especially in densely inhabited areas such as the Po Valley, which impose the transportation to high distance.

To date, therefor, the breeders have disposed these dejections through the spreading thereof onto an agricultural soil adjacent to the breeding (and consequently exclusively used as a disposal site), the sewage remaining in temporary collecting basins or lagunes (with the attendant problems of pollution of the water bearing strata and of miasmas).

Besides the problem of the polluting load of the dejections , as regards the breedings that of the hygiene and of the comfort both of the animals and of the breeding attendants cannot be forgotten.

As a matter of fact it is well known that, when the animals are bred in closed or anyhow delimited and surrounded environnments, it is necessary to periodically carry out a cleaning operation during which there are not only removed the accumulated dejections, but also the layer of straw, sawdust and the like, forming the so-called litter, is substituted for.

It is evident that these problems, also owing to the more and more rigid rulings on the environnmental protection, heavily influence the potentialities of the zootechnic breedings.

Before illustrating the purposes and the essential features of the present invention some preliminary considerations seem to be proper.

The biological depuration of sewage (as well as of the effluent waters, both industrial and domestic) is based on the activity of microorganisms which are developed and operate under strongly aerobic conditions, giving place to resulting sludges containing both the biomass excess and the inorganic components of the polluting load.These sludges, in turn, must be disposed, although the substantial absence of polluting load renders this duty easier.

However the disposal of these sludges, either by spreading onto agricultural soils and by dehydratation and burning, raises problems and in any way causes the depuration costs to be increased by a not negligible rate, these costs obviously influencing the general industrial costs.

Besides the biological processes of aerobic type there are since long time known also anaerobic depuration methods, which are capable of solving the polluting load of whatsoever sewage; these methods would be very useful in the case of animal dejections since the microorganisms responsible of the activity by which the polluting organic components are removed operate in substantial absence of oxygen and thus no aeration of the sewage is necessary.

However also in this case essentially insurmountable problems exist rendering it unacceptable the application of such a method to the treatment of the animal dejections.

Firstly the anaerobicity of the method requires the introduction of the sewage into a closed environnment (being either a ditch digged into the ground or a tank or reservoir) with the self-evident problems owing to the volumes of dejections to be treated.

Secondly the substantial elimination of the organic polluting load requires very long times, of the order of several weeks, whereby their exploitation becomes industrially unacceptable.

The latter problem has also caused the so-called mixed processes, resulting from the combination of a first phase of aerobic nature and of a second phase of anaerobic nature, to be unfeasible.

It is lastly to be noticed that anyhow the depuration of sewages originating from the zootechnic breedings has never taken it into account or even taken it into consideration the further problem as above mentioned, namely that of the hygiene and comfort situation of the breeding farms.

The latter as a matter of fact have been faced separately, by proposing grids or like dividing elements adapted to permit the removal of the dejections, especially the liquid ones, within wells or collecting headers, wherefrom the sewage was later removed and transferred to the depuration. It however has not solved the problem of the litters, remaining moist and dirty, whereby the need of their frequent renewal remained unchanged.

It is lastly to be noticed that in the animal dejections and thus in the litter autochthonous microorganisms are present which, in very long times comparable with those of the anaerobic depuration or digestion as above mentioned, may carry out a slow depuration or more exactly a degradation of the subject dejections, according to a mechanism like that occuring in the standard dung-heaps.

WO-A-8800082 discloses a static process for the preparation of compost by means of heaps, wherein stabilized manure is added with residues of various nature, like fillers, and pH stabilizing additives (3 to 4% of calcium hydrate).

The process is discontinuous since the heaps are treated as such for 13 to 14 days and the temperatures reach very high values (70 to 75^{o}C.) which are typical of the manure forming process.

In EP-A-63621 dejections and sewage in liquid form are directly treated in the collecting lagoons. The process is based on the addition of saponine, which has the effect of dissolving the surface fatty layer at the lagoon surface, since the elimination of this fatty layer promotes the growth of bacteria, still in liquid phase.

In GB-A-1299630 the preparation of substrates for the growth of edible mushrooms is described.

Main purpose of the present invention is that of providing a plant by which all the problems as above shortly pointed out are substantially solved in an industrially advantageous and technically satisfactory manner.

It has been surprisingly found and is the main object of the present invention that, if the animal dejections are admixed with a lignocellulosic biomass in form of discrete particles (wood shavings, sawdust and the like) and this mixture is sprayed with an activating nutrient composition, capable of promoting and support the growth of the microorganisms naturally present in the dejections, a fermentation of aerobic type occurs within the mixture with a degradation of faeces or ordures and of the urines to simpler and readily degradable compounds, said fermentation taking place with a high heat development.

Thus the digesting plant for animal dejections according to the present invention comprises a fermentation bed consisting of an inert material in form of particles, having a minimum thickness of 20 cm dedicated to a phase of aerobic fermentation said inert material being of lignocellulosic nature and being selected among dry wood residues, comminuted straw, sawdust, wood shavings, residues of wheat and rice processing, ground trimmings or loppings and the like, means for the mixing up of the surface layer of the fermentation bed with the charge of dejections to be treated, so that the latter are essentially digged within the fermentation bed but close to the surface thereof, and means for the spraying of the surface of the fermentation bed with an activating nutrient composition in liquid form, said activating nutrient composition being capable of promoting the growth of the microorganisms naturally present in the animal faeces.

More particularly the fermentation bed, has a minimum thickness of 20 to 25 cm, if it is only dedicated to the phase of aerobic fermentation, or a minimum thickness of at least 70 cm, when in the fermentation bed both the aerobic fermentation and the anaerobic fermentation must take place in a spatially vertical succession, said fermentation bed being alternatively positioned:
1) as a permanent substitution for the usual litter in the case of use in stables or enclosed environments, wherein the animals are permanently staying;
2) under the cages, bird-cages or other superelevated structures with respect to the ground, in the case of poultry and birds;
3) in structures separated from the staying areas of the animals being bred and thus outwardly of the proper breeding farm.

Thus the digesting plant with controlled fermentation may include only the phase of aerobic fermentation, and in this case the products of degradation of the ordures and urines are collected and transferred to a separate depuration step.

Alternatively the digesting plant may conprise both the aerobic fermentation phase and the anaerobic fermentation phase and in this case at the end of each operating cycle there are collected as the final products water, methane and insoluble mineral salts, or, when a shortened cycle is carried out a sewage with reduced and controlled polluting load,liable to a normal and subsequent biological depuration.

In both cases the digesting plant has associated thereto means for the mixing up again of the surface layer of the fermentation bed with the charge of dejections to be treated so that the latter are essentially digged within the fermentation bed but close to the surface thereof, and means for the spraying of the surface of the fermentation bed with an activating nutrient composition, preferably in liquid form.

In the preferred case of the fermentation bed in which the two above specified fermentations occur in succession,the preparation of the fermentation bed takes place in the following manner:
A biomass is prepared consisting of dry wood residues, comminuted straw, sawdust, wood shavings, residues of the processing of wheat or rice or ground trimmings and the like, or other inert material such as for example vermiculite, pumice, chamotte, and the dejection charge is admixed with the surface layer thereof, it being thereafter sprayed with the activating nutrient composition, capable of promoting the growth of the microorganisms naturally present in the faeces.

In the case of the swine or even bovine breedings the afore sadi fermentation bed constitutes the usual litter onto which the animals live and has a minimum depth of 70 cm., whereas the maximum height, which theoretically has no definite limits, as a matter of practice and on the basis of the experimental results has a depth not greater than 150 cm. Preferably the litter consists of mixtures of the afore said lignocellulosic materials, since in that manner the percolation rate of liquids, namely urines and faeces decomposition materials, through the fermentation bed is more easily controllable.

The operating cycle, which as a matter of fact comprises both the phase of aerobic fermentation , involving the upper layer of the litter, for a depth of about 25-30 cm., and the phase of anaerobic fermentation which takes place in the remaining thickness of the litter, has a duration of about one week, if a complete mineralization of the faeces and urines is sought for, whereas shortened cycles give place to products having a limited organic polluting load, which can be solved by means of a final treatment of biological depuration.

In the phase of aerobic fermentation the growth of the bacterial flora is accompanied by a relevant heat development (of the order of 2-3 Kcal per gram of fermentation bed) which is not only responsible of the substantially dry status of the litter surface, but can be also recovered and used, for example for the energy requirements of the breeding.

In turn the phase of anaerobic fermentation takes place, with heat absorption, on the decomposition products of the faeces and of the urines (as resulting from the previous phase of aerobic fermentation) and this is a plausible explanation of the reason for which this phase, which within a week leads to the complete mineralization of the subject decomposition products, has a much shorter duration than the standard cycles of anaerobic digestion of sewage.

For each operating cycle the surface of the aerobic fermentation bed is oxygenated for a depth not higher than 25-30 cm, for example through the aeration resulting from a harrowing operation, whereafter the above described operations are carried out.

Only after a twelve month time or more the surface layer taking part in the aerobic fermentation , and thus for a maximum depth of 30 cm. is removed and renewed with fresh lignocellulosic material, whilst the removed material (resembling to dry mould) can be used as organic manure or integrating additive fro the ground, especially for horticulture.

The analysis of this material has the following characteristics:

| | |
|---|---|
| moisture | 50 - 60% |
| raw protides | 6 - 8% |
| raw fibers | 20 - 30% |
| ashes | 7 - 10% |
| pH | 6.5 - 7 |

Among the other and not negligible advantageous features of the present treatment of the animal dejections and thus of the plant in which it is practiced, there must be mentioned from one side the relevant improvement of the breeding environnment with great advantage not only for the attendants but also for the animals.From the other side and in this connection it is worth to note the almost total disappearance of the bad smell which to date were a constant of the zootechnic breedings, especially swine breedings.

Lastly from the point of view of the running the substantial elimination of almost daily operations of cleaning and renewal of the litter is to be cited.

In the case of breedings in cages or raised structures, the fermentation bed, preferably enclosed within a tight sealed container, is positioned under the cages or the like at a distance of at least one meter from the bottom of the cage.

In this case too the operations requested at the beginning of each operating cycle are substantially unchanged with respect to the preceeding case, apart from that the removal of the surface layer of the fermentation bed is more frequent, taking it also into account that the poultry dejections (for example hens) fall in a discrete distribution directly onto the surface of the fermentation bed together with feathers and resoidues of broken eggs.

The two above embodiments relate to solutions adopted inside the breeding, but also embodiments outside of the breeding are possible, which are especially adapted for breedings joined as regards the treatment of waste or fro breedings having to face the problem of the so-called "lagoons" wherein the dejections are collected waiting for undergoing a depuration treatment.

In this case the digestor consists of a pit digged into the soil and having walls for example of concrete with waterproofed internal surface.

Preferably the pit is covered by a roof structure, possibly provided with venting or purging elements.

Within the pit the fermentation bed is formed in the same manner as previously described and preferably the dejections are fed to the upper surface of the bed itself, for example by pumping means.

In this case the fermentation bed may have a greater depth (from 90-100 cm. up to 150-160 cm.) and the amount of dejections treated for each cycle depends also on their water content.

A further important feature is that of the oxygenation of the upper layer, namely that in which the aerobic phase takes place, whereby, if necessary, means can be provided for the air blowing or for the distribution of an oxygen source, such as for example hydrogen peroxide.

In the accompanying drawings there are illustrated, for exemplifying but non limiting purpose:
in fig.1 a schematic view of a fermentation bed according to the present invention in the most general embodiment;
in fig.2 a schematic view of a fermentation bed with two fermentation phases placed inside the breeding environnment; and
in fig.3 a schematic view of a fermentation bed like that of fig.2 but positioned outside of the breeding environnment.

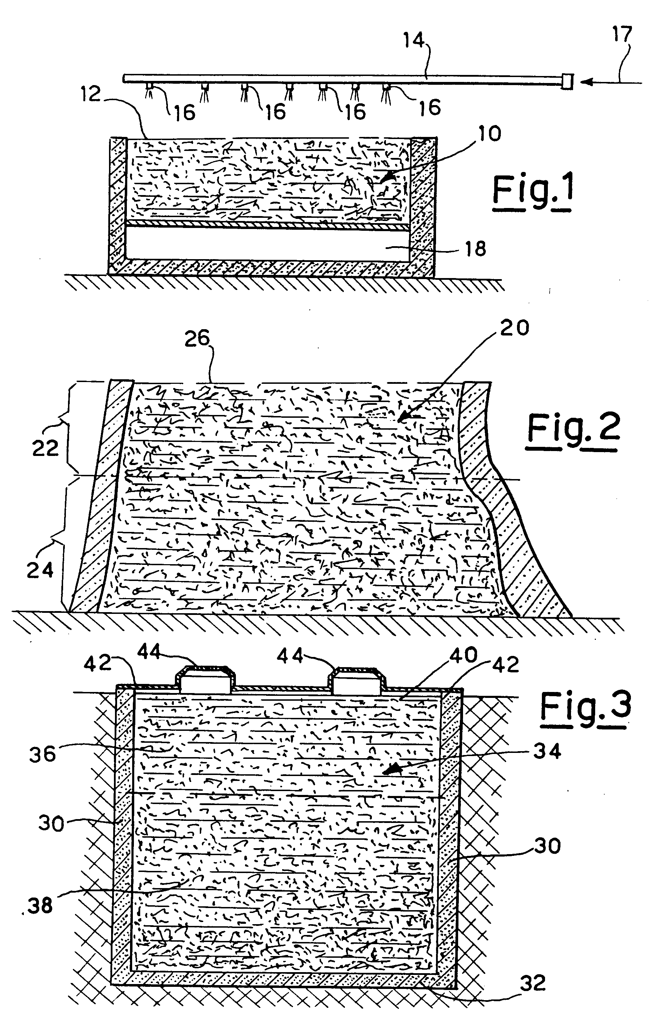

In the embodiment of fig.1, relating to the most general embodiment of the present invention, the fermentation bed 10 is formed by particles or shavings of lignocellulosic nature, such as above explained, and in this bed the aerobic fermentation is effected, since the particle mass is enough aerated or oxygenated at the beginning of each treatment cycle. The upper surface of the bed 10, indicated by the reference 12, immediately after the admixing with the charge of dejections to be treated, is sprayed with the activation nutrient composition, by means of spraying or moistening means of standard type and represented in fig.1 by a header 14 provided with spray nozzles 16. The arrow 18 indicates the inlet of the solution to be sprayed coming from a not shown tank.

This activating nutrient composition must comprise, in order to be able to fulfill its function, the following components:
1) A source of metabolizable or fermentable carbon, preferably selected among simple and complex sugars, organic acids and their salts, alcohols, such as for example dextrose, lactic acid and lactates;
2) A source of nitrogen assimilable from the microorganisms present in the dejections, preferably selected among ammonia salts, urea and soluble proteins;
3) A source of phosphor preferably in form of a mineral salt.

The composition preferably comprises also one or more vitamins selected among those promoting the growth of the afore said microorganisms as well as other mineral salts such salts of iron, copper, manganese and zinc.

Coming back to the embodiment of fig.1, The reference 18 shows a collecting chamber for the degradation products of the faeces and of the urines owing to the action of the microorganisms present in the fermentation bed and which cause the aerobic fermentation to occur with the attendant degradation of the dejections initially incorporated in the surface layer of the fermentation bed.

From the collecting chamber18 these degradation products are removed and conveyed to a subsequent depuration treatment which can be either an anaerobic fermentatio or a conventional biological treatment with active sludges.

It is worth to note that the fermentation bed 10 is constantly in dry condition as a consequence of the heat which in a relevant amount is developed from the aerobic fermentation; as an indication it is enough to mention that in the experimental tests the temperature of the fermentation bed increases to about 40-50^{o}Cduring 24 hours from the beginning of the treatment cycle, namely from the time at which the surface 12 of the fermentation bed is sprayed with the activating nutrient composition.

Turning now to considering the fig.2,the embodiment is shown which is suitable in the case of a fermentation bed substituting the traditional litter and thus placed inside the breeding environnment or other breeding delimited or enclosed room.

In this case two zones can be individuated, respectively 22 and 24 of the fermentation bed 20, corresponding the first one (22) to the portion of the bed 20 in which the aerobic fermentation takes place, whereas the second one (24) is that in which the anaerobic fermentation occurs.

In the experimental practice it has been assessed that for a correct operation the depth of the zone 22 must be about one third of the whole height of the fermentation bed whereas the remaining two thirds are dedicated to the anaerobic fermentation.

In this case too, likewise the embodiment of fig.1, conventional means are provided above the surface 26 of the fermentation bed 20 for spraying or moistening the surface itself with the activating nutrient composition.

The experimental practice already referred to has shown that if the treatment cycle and thus of fermentation in the bed 20 has a duration of about one week anly water and insoluble mineral salts are found at the bottom of the fermentation bed, whereas the methane which is formed in the course of the anaerobic fermentation can be collected and conveyed to a use or vented to the atmosphere.

Coming lastly to the embodiment shown in fig.3, it refers to the case in which the treatment of the dejections is effected outside of the breeding environnment, or better to say outside of the areas in which the animals stay.

In this case in the soil a ditch is formed the walls (30) and the bottom (32) of which are preferably of reinforced concrete, suitably waterproofed.

Within the ditch a fermentation bed 34 is formed like that shown in fig.2 and thus subdivided into an upper zone 36, in which the aerobic fermentation takes place, and in a lower zone 38 (having a height of about two thirds of the total height of the fermentation bed 34) in which the anaerobic fermentation takes place.

Preferably the surface 40 of the fermentation bed 34 is protected from a removable cover 42 (for example by mechanical means) for the operation to be carried out at the beginning of each treatment cycle, and the cover is in turn provided with venting cups 44.

The operation of the embodiments of the digestion plant shown in the previous figures doesn't require further explanations.

It is however to be noted that, even if not shown as being of traditional type, harrowing or aerating means for the upper layer of the fermentation bed can be provided in combination with the plant for their use at the beginning of each operating cycle, before admixing with the afore said surface layer the amount of dejections to be treated in each cycle.Likewise in the zone of the fermentation bed in which the aerobic fermentation takes place recovery means can be provided for the heat developed in this fermentation type, for example in form of heat exchange pipes within which a fluid circulates, for example water, to be heated thanks to the heat generated during the aerobic fermentation.

## Claims

1. A digesting plant for animal dejections comprising a fermentation bed consisting of an inert material in form of particles, having a minimum thickness of 20 cm dedicated to a phase of aerobic fermentation said inert material being of lignocellulosic nature and being selected among dry wood residues, comminuted straw, sawdust, wood shavings, residues of wheat and rice processing, ground trimmings or loppings and the like, means for the mixing up of the surface layer of the fermentation bed with the charge of dejections to be treated, so that the latter are essentially digged within the fermentation bed but close to the surface thereof, and means for the spraying of the surface of the fermentation bed with an activating nutrient composition in liquid form, said activating nutrient composition being capable of promoting the growth of the microorganisms naturally present in the animal faeces.

2. A digesting plant according to claim 1, characterized in that said fermentation bed is substitute of usual breeding farm litter.

3. A digesting plant according to claim 1, characterized in that said fermentation bed has a thickness of at least 70 cm, 20-30 of which are dedicated to the phase of aerobic fermentation, and the remaining part is dedicated to a phase of anaerobic fermentation.

4. A digesting plant according to claim 1, characterized in that said fermentation bed is placed in a pit of waterproof material.

5. A digesting plant according to claim 4, characterized in that said waterproof material is reinforced concrete, the inner walls of which are waterproofed and sealtight.

6. A digesting plant according to either claim 4 or 5, characterized in that said pit is provided with a cover having venting outlets.

7. A digesting plant according to claims 1, 3 or 4, characterized in that said fermentation bed is positioned under breeding cages for poultry at a distance of at least one meter from the bottom of said cages.

## Patentansprüche

1. Digerieranlage für Tierexkremente, umfassend ein Fermentierungsbett, das aus einem inerten Material in Form von Teilchen besteht, mit einer Mindestdicke von 20 cm, die für eine Phase von aerober Fermentierung bestimmt ist, wobei das inerte Material von der Art des ligninhaltigen Zellstoffs ist und unter trockenen Holzresten, zerkleinertem Stroh, Sägemehl, Hobelspänen, Resten der Weizen- und Reisverarbeitung, Boden-Schneidgut oder abgehauenen Ästen und dergleichen ausgewählt ist, Einrichtungen zum gründlichen Vermischen der Oberflächenschicht des Fermentierungsbetts mit der Ladung der zu behandelnden Exkremente, so daß diese im wesentlichen im Fermentierungsbett aber dicht an dessen Oberfläche vergraben sind, und Einrichtungen zum Berieseln der Oberfläche des Fermentierungsbetts mit einer aktivierenden Nährzusammensetzung in flüssiger Form, wobei die aktivierende Nährzusammensetzung die Eigenschaft hat, das Wachstum der in Tierkot natürlich vorhandenen Mikroorganismen zu fördern.

2. Digerieranlage nach Anspruch 1, dadurch gekennzeichnet, daß das Fermentierungsbett Ersatz für gewöhnlichen Zuchtfarm-Stallmist ist.

3. Digerieranlage nach Anspruch 1, dadurch gekennzeichnet, daß das Fermentierungsbett eine Dicke von mindestens 70 cm hat, von denen 20 bis 30 für die Phase der aeroben Fermentierung bestimmt sind, und der verbleibende Teil für eine Phase der anaeroben Fermentierung bestimmt ist.

4. Digerieranlage nach Anspruch 1, dadurch gekennzeichnet, daß sich das Fermentierungsbett in einer Grube aus wasserfestem Material befindet.

5. Digerieranlage nach Anspruch 4, dadurch gekennzeichnet, daß des wasserfeste Material Stahlbeton ist, wobei die Innenwände wasserfest und dicht verschlossen sind.

6. Digerieranlage nach einem der Ansprüche 4 oder 5, dadurch gekennzeichnet, daß die Grube mit einer Abdeckung mit Lüftungsöffnungen ausgestattet ist.

7. Digerieranlage nach einem der Ansprüche 1, 3 oder 4, dadurch gekennzeichnet, daß sich das Fermentierungsbett unter Zuchtkäfigen für Geflügel bei einem Abstand von mindestens einem Meter von dem Boden der Käfige befindet.

## Revendications

1. Un digesteur pour le traitement de déjections animales comprenant un lit de fermentation consistant en un matériau inerte particulaire ayant une épaisseur minimum de 20 cm dans laquelle s'effectue une phase de fermentation aérobie, ledit matériau inerte étant de nature lignocellulosique et étant choisi parmi les résidus de bois sec, la paille hâchée, la sciure de bois, les copeaux, les résidus de traitement du blé et du riz, les résidus de coupe, de fauchage et d'émondage et les produits analogues, des moyens étant prévus pour mélanger la couche de surface du lit de fermentation avec la charge de déjections à traiter de telle sorte que les dites charges soient essentiellement enfouies dans le lit de fermentation tout en restant au voisinage de cette surface, des moyens étant prévus pour pulvériser sur la surface du lit de fermentation une composition de nutriment actif sous forme liquide, ladite composition de nutriment actif étant capable de déclencher la croissance des microorganismes naturellement présents dans les fèces animals.

2. Un digesteur selon la revendication 1, caractérisé en ce que le lit de fermentation est un substitut de la titière usuelle utilisée en ferme d'élevage.

3. Un digesteur selon la revendication 1, caractérisé en ce que le lit de fermentation présente une épaisseur d'au moins 70 cm, dont 20 à 30 cm sont dédiés à la phase de fermentation aérobie, la portion restante étant dédiée à la phase de fermentation anaérobie.

4. Un digesteur selon la revendication 1 caractérisé en ce que ledit lit de fermentation est placé dans un puits en matériau étanche.

5. Un digesteur selon la revendication 1 caractérisé en ce que ledit matériau étanche est du béton renforcé, les parois internes étant traitées pour être parfaitement étanches.

6. Un digesteur selon une des revendications 4 ou 5, caractérisé en ce que ledit puits est équipé d'un couvercle présentant des orifices de ventilation.

7. Un digesteur selon les revendications 1, 3 ou 4 caractérisé en ce que le lit de fermentation est mis en place sous des cages d'élevage de volaille à une distance d'au moins un mètre de la base des dites cages.
